**Europäisches Patentamt**

**European Patent Office**

**Office européen des brevets**

(19)

(11) Numéro de publication: **0 055 948**
**B1**

(12) **FASCICULE DE BREVET EUROPÉEN**

(45) Date de publication du fascicule du brevet:
08.06.88

(51) Int. Cl.⁴: **A 01 M 7/00,** B 05 B 3/10

(21) Numéro de dépôt: **81401303.3**

(22) Date de dépôt: **13.08.81**

(54) **Installation pour la pulvérisation d'un liquide de traitement, notamment de traitement des cultures ou des sols.**

(30) Priorité: **06.01.81 FR 8100089**

(43) Date de publication de la demande:
**14.07.82 Bulletin 82/28**

(45) Mention de la délivrance du brevet:
**08.06.88 Bulletin 88/23**

(84) Etats contractants désignés:
**AT BE CH DE FR GB IT LI LU NL SE**

(56) Documents cité:
**FR-A-1 501 610**
**FR-A-2 281 174**
**FR-A-2 327 822**
**FR-A-2 403 733**
**GB-A-1 504 868**
**US-A-3 590 503**
**US-A-3 807 605**

(73) Titulaire: **TECNOMA, 54, Rue Marcel Paul, F-51206 Epernay (FR)**

(72) Inventeur: **Ballu, Patrick, 4 Rue de l'Isle, F-51100 Reims (FR)**

(74) Mandataire: **de Boisse, Louis, CABINET DE BOISSE 37, Avenue Franklin D. Roosevelt, F-75008 Paris (FR)**

LIBER, STOCKHOLM 1988

EP 0 055 948 B1

## Description

La présente invention concerne une installation pour la pulvérisation d'un liquide de traitement, notamment de traitement des cultures ou des sols.

Différents types d'installations mobiles de pulvérisation sont largement utilisés dans l'agriculture, ainsi que pour les traitements arboricoles et viticoles.

Ces installations donnent toute satisfaction lorsque le volume de liquide qui doit être épandu par unité de surface est relativement élevé. Certains traitements nécessitent cependant l'épandage d'un volume de liquide relativement faible par unité de surface. Pour réduire le débit du liquide projeté par chaque ajutage d'une telle installation, il suffit évidemment de réduire le diamètre dudit ajutage. Une limite est cependant rapidement atteinte dans ce sens, notamment dans le cas de l'épandage de liquides plus ou moins chargés. Il apparaît alors en effet des risques importants d'obstruction des ajutages.

Le document FR-A-2 281 174 décrit une installation pour la pulvérisation et l'épandage de liquide de traitement des cultures ou des sols qui comprend un pulvérisateur pourvu d'un organe rotatif en forme de disque ou de cuvette, d'un ajutage, pour envoyer le liquide à pulvériser en direction de la partie centrale de cet organe rotatif, d'un circuit d'alimentation de l'ajutage comprenant un réservoir de liquide, et d'un organe d'interception constitué d'un collecteur annulaire fixe, placé le long du pourtour de l'organe rotatif sans contact avec lui, ce collecteur comportant plusieurs ouvertures périphériques situées dans le plan du bord externe de l'organe rotatif et destinées à permettre la sortie du liquide pulvérisé par le dit organe rotatif. L'installation selon ce document comprend, en outre, des moyens pour récupérer la fraction du liquide pulvérisé qui n'a pas traversé ladite ouverture mais a été intercepté par le collecteur. Selon une modalité facultative, des moyens non précisés sont prévus pour ramener cette fraction dans le circuit.

Dans la réalisation décrite, l'organe rotatif est à axe vertical, et le collecteur comprend une partie cylindrique d'axe vertical ouverte vers le haut, avec plusieurs ouvertures pour la sortie du liquide pulvérisé, prolongée vers le bas par une partie conique coaxiale, qui sert de réceptacle pour le liquide qui n'a pas traversé les ouvertures. L'organe rotatif est relié à un moyen d'entraînement situé au-dessus de lui par un arbre vertical, et l'ajutage est dirigé obliquement, à peu près vers un point de l'intersection de la périphérie de l'arbre d'entraînement avec la surface supérieure de l'organe rotatif.

Le but de la présente invention est de fournir un appareil qui, tout en profitant de la capacité à fournir de faibles débits qui résulte de la combinaison ajutage - organe rotatif - organe d'interception du document cité, permette cependant d'obtenir une répartition au sol beaucoup plus régulière, tout en restant d'une grande simplicité.

Ce résultat est obtenu par le fait que:
- le bord externe de l'organe rotatif tourne dans un plan qui est vertical ou incliné sur l'horizontale,
- l'overture périphérique du collecteur est unique et la bissectrice de l'angle au centre du secteur correspondant à celle-ci est inclinée vers le bas.

Cette dispositon permet de projeter des gouttelettes avec une vitesse que présent un composant verticale qui s'ajoute à celle qui est due à la force de gravité pour une bonne pénétration à la surface du sol, même si celle-ci n'est pas plan. En outre, la composante de vitesse qui résulte du mouvement du véhicule porteur peut se combiner de façon plus rationnelle et uniforme, surtout si le plan de rotation de l'organe rotatif est vertical.

De préférence, le collecteur a la forme d'une gouttière sensiblement torique, à section transversale presque fermée à l'exception d'une fente annulaire étroite disposée pour recevoir des gouttelettes projetées par l'organe rotatif sensiblement dans le plan de son bord externe, et la partie la plus basse de ce collecteur est reliée à un réceptacle de récupération du liquide.

On obtient ainsi une interception de la fraction désirée du liquide envoyé par l'ajutage, sans expulsion de gouttes parasites, source d'irrégularité.

L'orientation et la dimesion de l'ouverture périphérique du collecteur dépendent du traitement désiré. On peut prévoir des collecteurs interchangeables, cependant, des modalités préférées sont décrites aux revendications 3 et 4.

Une autre modalité préférée fait l'objet de la revendication 5, qui décrit un moyen d'améliorer encore la régularité de la pulvérisation, grâce à une disposition symétrique de l'ajutage, rendue possible par le choix de la place du moteur.

La présente invention permet de réaliser des installations mobiles de pulvérisation à plusieurs organes rotatifs, pour l'agriculture et notamment pour les cultures basses. Les mêmes installations mobiles selon la présente invention peuvent être facilement adaptées pour les traitements arboricoles et viticoles en prévogant une ou plusieurs souffleries, produisant un courant d'air dirigé de façon à entraîner le liquide pulvérisé par chaque organe rotatif en direction des plantes à traiter.

On sait que les installations mobiles de pulvérisation de ce genre épandent un volume de liquide sensiblement constant par unité de temps, si bien que les variations de leur vitesse d'avancement se traduisent par des variations correspondantes du volume de liquide épandu par unité de surface.

Une forme de réalisation de la présente invention offre cependant l'important avantage de permettre l'épandage d'un volume constant de liquide par unité de surface malgré les variations de la vitesse d'avancement de l'installation mobile de pulvérisation. Cette forme de réalisation est caractérisée en ce que les organes rotatifs sont alimentés respectivement par des pompes péristaltiques, dont les rotors sont calés sur un arbre commun, accouplé au moyeu d'une roulette d'entraîement, par exemple une roulette à bandage pneumatique peu ou pas gonflé, appliqué sur la périphérie d'une roue de l'installation mobile ou de son véhicule porteur et/ou tracteur.

Dans la mesure où il ne se produit pratiquement aucun glissement entre la roulette d'entraînement, à bandage pneumatique peu gonflé, et la roue de l'installation ou du véhicule correspondant, sur la périphérie de laquelle ladite roulette est appliquée, ainsi qu'entre cette roue et le sol, cette disposition selon la présente invention assure une quasi proportionnalité entre le débit volumétrique de chaque pompe péristaltique et la vitesse d'avancement de l'installation, d'où résulte un volume d'épandage pratiquement constant par unité de distance parcourue par l'installation mobile, et, par suite, par unité de surface traitée.

A titre d'exemple, on a décrit ci-dessous et illustré schématiquement au dessin annexé plusieurs formes de réalisation de l'invention.

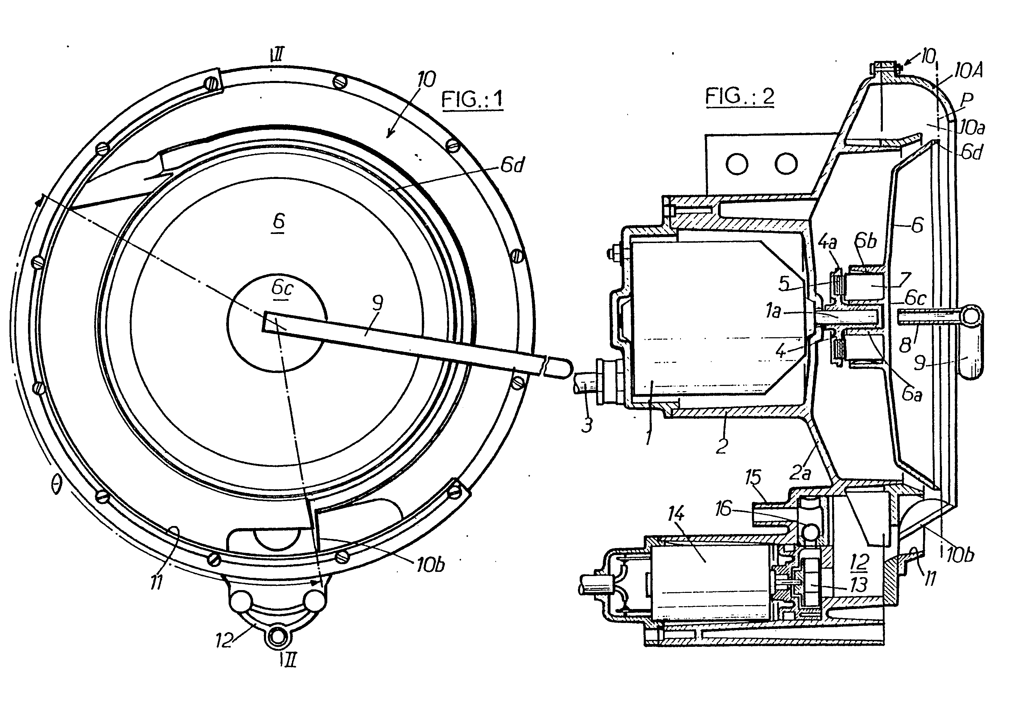

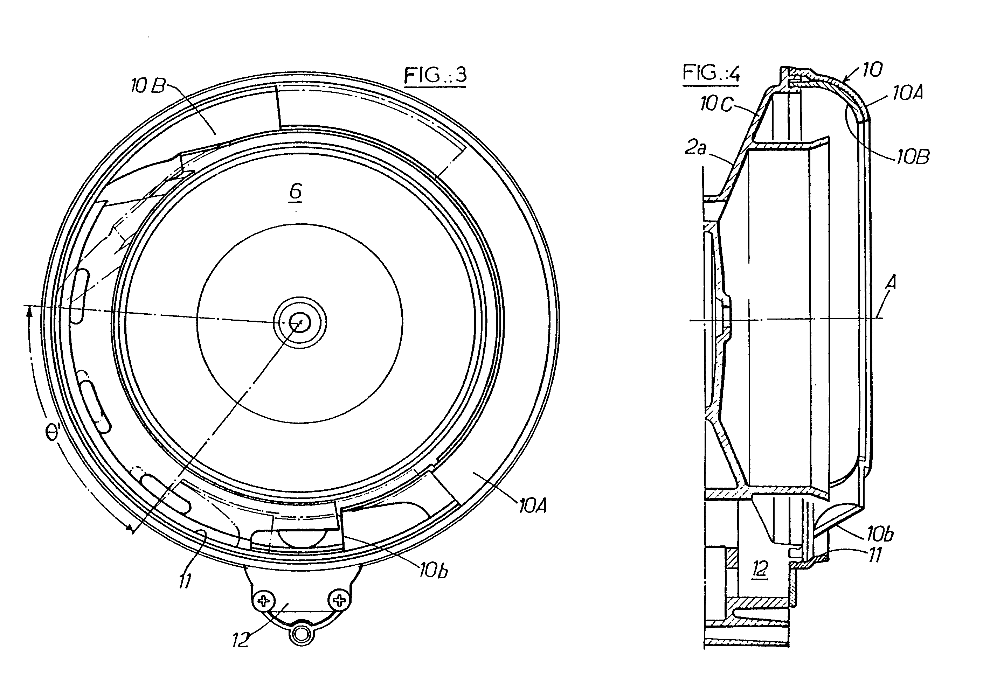

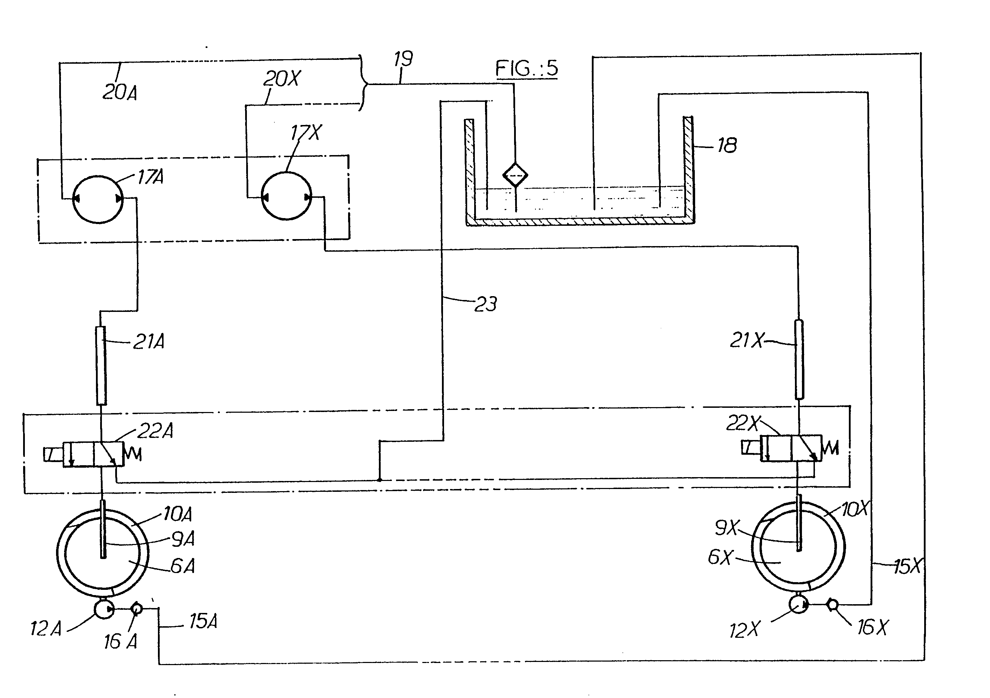

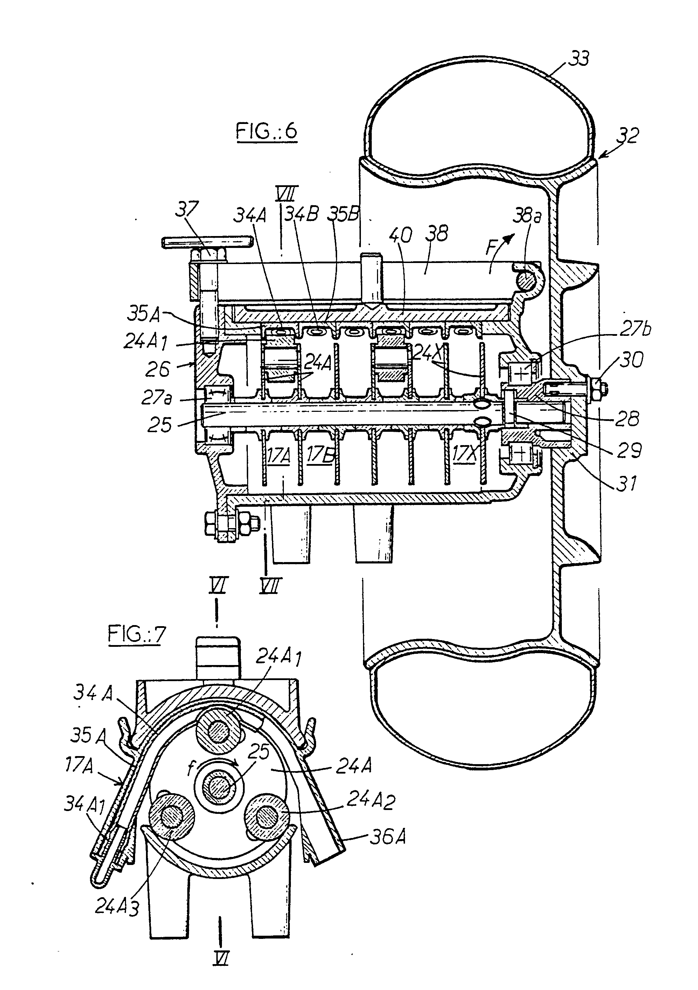

Les figures 1 et 2 sont respectivement une vue de face et une vue en coupe par un plan axial d'une première forme de réalisation de l'un des organes rotatifs dont peut être équipée une installation de pulvérisation selon la présente invention. Les figures 3 et 4 sont des vues correspondantes d'une seconde forme de réalisation, la figure 4 étant simplifiée pour montrer seulement le collecteur associé à un organe rotatif (non représentée). La figure 5 est le schéma hydraulique d'une forme de réalisation d'une installation mobile de pulvérisation selon la présente invention, permettant l'épandage d'un volume constant de liquide par unité de surface, malgré les variations de sa vitesse d'avancement. La figure 6 est une vue en coupe par un plan axial du système de pompes péristaltiques dont est pourvue la forme de réalisation de la figure 5, ainsi que de la roulette d'entraînement de ce système de pompes. La figure 7 est une coupe suivant la ligne VII-VII de la figure 6.

Sur les figures 1 et 2, 1 désigne un moteur électrique, qui est logé dans un carter 2, et qui reçoit son alimen tation électrique d'un câble 3, traversant ledit carter 2; des moyens connus, non représentés, sont prévus pour permettre d'ajuster avec précision la vitesse de rotation du moteur électrique 1; il peut s'agir d'un rhéostat de réglage (non représenté) ou de circuits électroniques de réglage de la vitesse, bien connus de l'homme de l'art, et qu'il n'est donc pas nécessaire de décrire en détail. Sur le bout, la, de l'arbre du moteur 1, qui sort du carter 2 dans une direction horizontale sur la figure 2, est assujetti un manchon 4, par exemple en matière synthétique moulée, qui est solidaire d'un plateau 4a perpendiculaire au bout d'arbre 1a, ou d'éléments radiaux, comportant chacun, sur sa face opposée au carter 2, un évidement dans lequel est assujetti un aimant permanent 5. L'organe rotatif 6 présente, dans cette forme de réalisation, la forme d'une cuvette peu profonde, dont le fond est solidaire d'un premier élément cylindrique 6a, enfichable par dessus l'extrémité correspondante du manchon 4, ainsi que d'un second élément cylindrique 6b, de diamètre intérieur un peu supérieur à celui de la surface cylindrique où sont inscrits les aimants permanents 5; une bague métallique annulaire 7 est assujettie entre les deux éléments cylindriques 6a et 6b de manière que sa face gauche (sur la figure 2) vienne au contact des aimants permanents 5. Cette bague annulaire 7 est constituée de préférence en fer doux. Le dispositif que vient d'être décrit assure l'accouplement de l'organe rotatif 6 avec le bout la de l'arbre du moteur 1, dans des conditions qui permettent une extraction et une remise en place très rapides dudit organe rotatif 6. En regard de la partie centrale 6c de la face de l'organe rotatif 6, opposée au moteur 1 débouche un ajutage cylindrique 8; une pompe (non représentée), par exemple à débit volumétrique constant, prélève le liquide à pulvériser dans un réservoir et le refoule dans l'ajutage 8 par l'intermédiaire d'une conduite 9.

Selon la présente invention, le carter 2 qui enveloppe le moteur 1 est prolongé, du côté de l'organe rotatif 6, par une collerette tronc oni que 2a, dont le pourtour est solidaire d'un collecteur 10; dans la forme de réalisation considérée, ce collecteur a la forme d'une gouttière sensiblement torique, à section transversale presque fermée, à l'exception d'une fente annulaire étroite, 10a, au niveau du plan P (en traits mixtes sur la figure 2), qui est perpendiculaire au bout d'arbre 1a, donc vertical sur la Figure 2, et qui passe par le bord externe, 6d, dudit organe rotatif 6. Comme visible sur la figure 1, le collecteur 10 a la forme d'un secteur d'anneau, d'angle égal à (360° - θ), de façon à ne dégager le bord externe 6d de l'organe rotatif 6 dans le plan P que sur l'angle θ. La partie la plus basse, 10b du collecteur annulaire 10, s'ouvre au-dessus d'une goulotte 11, conduisant elle-même dans un réceptacle de récupération 12.

Le jet de liquide sortant de l'ajutage 8, heurte, en se pulvérisant, la partie centrale 6c de l'organe rotatif 6; la force centrifuge fait migrer les gouttelettesde liquide pulvérisé vers le bord externe 6d de l'organe 6, qui projette lesdites gouttelettes sensiblement dans le plan P. Toutes les gouttelettes projetées au niveau du collecteur annulaire 10 pénètrent dans sa gouttière torique par la fente 10a puis s'écoulent par gravité jusqu'à sa partie la plus basse 10b; là, le liquide rassemblé par le collecteur 10 s'écoule dans le réceptacle 12 par la goulotte 11. Seules sont utilisées pour le traitement les gouttelettes de liquide pulvérisé que le bord externe 6d de l'organe rotatif 6 projette au niveau du secteur fixe, d'angle 8, dégagé par le collecteur annulaire 10. Le liquide rassemblé dans le réceptacle 12 y est renvoyé dans le réservoir (non représenté) par l'action d'une petite pompe centrifuge 13, qui est entraînée par un moteur électrique 14, et qui refoule ledit liquide dans une conduite de retour 15, à l'entrée de laquelle est inséré un clapet anti-retour 16; ce dernier évite que, à l'arrêt de la pompe centrifuge 13, le liquide contenu dans la conduite de retour 15 ne reflue dans le réceptacle 12.

Dans la variante illustrée schématiquement et partielle ment sur les figures 3 et 4, le collecteur 10, ou tout au moins sa partie située à l'opposé de la collerette tronconique 2a, comporte deux éléments en forme de secteur d'anneau, 10A et 10B, qui sont montés de façon à être déplaçables, concentriquement à l'axe A de l'organe rotatif, l'un par rapport à l'autre, ainsi que par rapport à la partie fixe, 10C dudit collecteur 10, qui est solidaire de la collerette tronconique 2a. Comme dans la forme de réalisation des figures 1 et 2, la partie la plus basse, 10b, du collecteur annulaire 10, et notamment de son élément 10A s'ouvre au-dessus de la goulotte 11 qui aboutit dans le réceptacle 12, servant à la récupération du liquide. Sur la figure 3, on a représenté en traits pleins les positions des deux éléments mobiles 10A et 10B du collecteur annulaire 10 qui correspondent à son ouverture maximale, c'est-à-dire à un angle de projection du liquide voisin de l'angle θ indiqué sur la figure 1. Sur la même figure 3, on a indiqué en traits mixtes les positions des éléments déplaçables, 10A et 10E, du collecteur annulaire 10, qui correspondent à une plus faible ouverture dudit collecteur, c'est-à-dire à un angle de pulvérisation θ', inférieur à l'angle maximal θ. Cette disposition selon la présente invention permet donc d'ajuster l'angle θ de pulvérisation entre une valeur maximale et une valeur minimale, qui peut être encore inférieure à θ' (figure 3), et notamment aussi faible que 10 ou 15°. Des valeurs aussi faibles de l'angle de pulvérisation θ permettent évidemment d'obtenir des volumes d'épandage notablement inférieurs à 20 litres/hectare. On rappelle que le réglage de la vitesse du moteur électrique 1 (figure 2), permet de régler le diamètre des gouttelettes de liquide pulvérisé.

La figure 5 est le schéma hydraulique d'une installation mobile de pulvérisation selon la présente invention, qui est équipée d'un certain nombre d'organes rotatifs, 6A à 6X, munies chacune d'un collecteur annulaire, 10A à 10X, de l'un des types illustrés sur les figures 1 à 4 et précédemment décrits. Cette installation comporte plusieurs pompes, 17A à 17X, qui prélèvent le liquide à pulvériser dans un récipient 18, par l'intermédiaire de conduites 19 et 20A à 20X; les pompes 17A à 17X refoulent respectivement le liquide à pulvériser dans les conduites 9 à 9X, alimentant les ajutages (non représentés) des différents organes rotatifs, 6A à 6X, par l'intermédiaire, respectivement, de manchettes dilatables, 21A à 21X, d'un type connu, destinées à servir de régulateurs de débit, et d'électrovannes de commande, 22A à 22X.

Chacune des électrovannes 22A à 22X est du type connu, comportant une position de repos (représentée sur la figure 5), dans laquelle la pompe correspondante, par exemple 17A, débite dans une conduite commune de retour, 23, aboutissant au réservoir 18, et une position de travail, dans laquelle la pompe correspondante débite dans la conduite 9A précédemment mentionnée. Les réceptacles de récupération du liquide, 12A à 12X, qui sont associés respectivement aux collecteurs 10A à 10X des buses 6A à 6X sont raccordés au réservoir 18 respectivement par des conduites 15A à 15X, dans lesquelles sont insérés des clapets anti-retour, 16A à 16X, comme on l'a décrit précédemment à propos de la figure 2.

Dans la forme de réalisation de l'invention, dont la figure 5 reproduit le schéma hydraulique, chacune des pompes 17A à 17X, associées respectivement aux organes rotatifs 6A à 6X, est une pompe péristaltique, réalisée par exemple comme illustré sur la figure 7. D'autre part, les différentes pompes péristaltiques, 17A à 17X, ont leurs rotors, tel que 24A, calés sur un arbre commun 25, dont les extrémités sont montées librement tournantes dans un carter 26, par l'intermédiaire de paliers à billes ou à rouleaux 27a et 27b; en fait, le palier 27b est celui d'un bout d'axe 28, dont la face intérieure au carter 26 est accouplée à l'extrémité correspondante de l'arbre commun 25 par l'intermédiaire d'une roue libre 29, tandis que sa face extérieure au carter 26 est accouplée, notamment par des boulons tels que 30, avec le moyeu 31 d'une roulette d'entraînement 32. Dans la forme de réalisation considérée, la roulette d'entraînement 32 est pourvue d'un bandage pneumatique 33, de préférence peu ou pas gonflé, et l'ensemble du carter 26, de l'arbre 25 et du moyeu 31 de la roulette 32 est porté, de façon connue en soi, par un bras oscillant, de telle manière que le bandage 33 de ladite roulette 32 soit appliqué, par exemple par le poids de l'ensemble, sur la périphérie d'une roue (non représentée) de l'installation mobile de pulvérisation ou bien du véhicule qui la porte, ou qui la tire si elle est elle-même munie d'organes porteurs.

Selon la présente invention, chaque pompe péristaltique telle que 17A ou 17B comporte un élément de tube déformable tel que 34A ou 34B, par exemple en matière synthétique extrudée, à section droite ovale, comme visible sur la figure 6; l'élément de tube déformable tel que 34A de chaque pompe telle que 17A, est placé dans une cassette amovible, telle que 35A, dont ledit élément de tube 34A est solidaire, par exemple par une extrémité 34A1 (figure 7); chacune des cassettes 35A présente, en section par un plan perpendiculaire à l'arbre commun 25, la forme visible sur la figure 7; on voit clairement en outre sur la figure 6 que chaque cassette telle que 35A ou 35B présente, du côté de l'arbre commun 25, une ouverture pour le passage des parties du rotor, tel que 24A, de la pompe péristaltique correspondante, qui sont destinées à l'écrasement local de l'élément de tube 34A; dans l'exemple de réalisation illustré, le rotor tel que 24A de chaque pompe péristaltique est constitué essentiellement par deux disques fixés perpendiculairement à l'arbre commun 25 par des manchons enfilés sur ce dernier, et par trois galets d'écrasement 24A1 à 24A3, montés entre les deux disques du rotor correspondant 24A, de façon à former, au-delà de la surface cylindrique enveloppant les deux disques, des saillies de largeur suffisante pour produire l'écrasement au moins partiel de l'élément de tube déformable 34A dans sa partie située vers le milieu de la cassette correspondante 35A, comme visible sur la figure 7.

Lorsque l'installation mobile de pulvérisation selon la présente invention progresse, par exemple à la suite de son véhicule tracteur (non représenté), la roue de l'installation ou de ce véhicule sur la périphérie de laquelle est appliqué le bandage pneumatique 33 de la roulette d'entraînement 32 entraîne cette dernière en rotation, et le sens de la roue libre 29 a été choisi tel que le moyeu 31 de ladite roulette 32 entraîne en rotation l'arbre commun 25 sur lequel sont calés les rotors de toutes les pompes péristaltiques. A chaque tour de la roulette 32, les galets tels que 24A1 à 24A3, portés par les rotors, tels que 24A, des différentes pompes péristaltiques, écrasent trois fois successivement la section de l'élément de tube déformable correspondant, 34A, ce qui a pour effet, à chaque fois, de faire refouler par le galet correspondant la quantité de liquide à pulvériser contenue dans la partie aval de l'élément de tube 34A (par rapport au sens de rotation indiqué par la flèche f sur la figure 7), en direction de la tubulure de sortie 36A (figure 7), qui est par exemple venue de moulage avec la cassette correspondante 35A. Le débit de chaque pompe péristaltique telle que 17A est régulé par la manchette dilatable correspondante, 21A, et une meilleure régularité de l'épandage au cours du temps peut être obtenue en décalant, par exemple de 120 degrés, les galets des rotors de deux pompes péristaltiques successives, par exemple 17A et 17B, comme visible sur la figure 6.

En l'absence de glissement entre, d'une part la roulette 32 et la roue sur la périphérie de laquelle elle est appliquée, et, d'autre part, entre cette dernière, et le sol, la vitesse de rotation instantanée des rotors tels que 24A des pompes péristaltiques telles que 17A est proportionnelle à la vitesse d'avancement de l'installation mobile de pulvérisation, ce qui assure au moins une constance approximative du volume de liquide épandu par unité de surface, malgré les variations de la vitesse d'avancement, qui sont inévitables en particulier sur les terrains irréguliers.

Si l'installation mobile de pulvérisation précédemment décrite est déplacée vers l'arrière, la roue libre 29 évite que la roulette 32 ne communique sa rotation à l'arbre commun 25 et que celui-ci n'entraîne par conséquent en rotation les rotors des différentes pompes péristaltiques.

Bien entendu, la section transversale de chacun des éléments de tube déformables tel que 34A doit être adaptée au volume de liquide qui doit être épandu par unité de surface, quelle que soit la vitesse d'avancement de l'installation de pulvérisation et par suite de la roulette d'entraînement 32. Le remplacement des éléments de tube déformables tels que 34A par des éléments de tube de section transversale différente est rendu aisé par le fait qu'il nécessite seulement l'enlèvement de la cassette amovible correspondante, telle que 35A, dont est éventuellement solidaire l'une des extrémités de l'élément de tube déformable 34A; comme visible sur la figure 6, l'enlèvement d'une ou plusieurs des cassettes telles que 35A nécessite seulement le dévissage des boulons tels que 37, ce qui permet ensuite de faire pivoter la plaque supérieure de fermeture 38 autour de l'axe 38a, dans le sens de la flèche F, et enfin de dégager lesdites cassettes par enlèvement de la plaque 40.

Les mêmes opérations permettent aussi le remplacement de l'un des éléments de tube déformables, en cas de détérioration, par exemple par usure, ou d'obstruction.

La présente invention n'est pas limitée aux formes de réalisation précédemment décrites. La réalisation de chacune des pompes péristaltiques est matière à option, de même que leur entraînement avec une vitesse instantanée toujours proportionnelle à la vitesse d'avancement de l'installation mobile. Dans le cas du collecteur illustré sur les figures 3 et 4, et précédemment décrit, le déplacement de ses deux éléments mobiles 10A et 10B permet non seulement de faire varier l'angle d'épandage θ ou θ', mais aussi la direction moyenne d'épandage, le long du pourtour de la buse - cette direction correspondant sensiblement à la bissectrice de l'angle θ' sur la figure 3 -. Même dans le cas d'un collecteur définissant un angle fixe, 8, de pulvérisation (figure 1), il est possible de rendre la partie 10A (figure 2) de ce collecteur déplaçable coaxialement à la buse 6 de manière à pouvoir déplacer la direction moyenne de pulvérisation le long du pourtour de ladite buse. Bien entendu, dans le cas du collecteur réglable illustré sur les figures 3 et 4, l'un de ses deux éléments, 10A ou 10B, peut être fixe, et, éventuellement, solidaire de sa partie fixe 10C, le réglage étant alors obtenu en déplaçant seulement son autre élément, 10B ou 10A.

**Revendications**

1. Installation mobile pour la pulvérisation et l'épandage à faible débit d'un liquide de traitement des cultures ou des sols, comportant au moins un pulvérisateur pourvu d'un organe rotatif (6) en forme de disque ou de cuvette, d'un ajutage (8) pour envoyer le liquide à pulvériser en direction de la partie centrale de cet organe rotatif, d'un circuit d'alimentation de l'ajutage comprenant un réservoir (18) de liquide, et d'un organe d'interception constitué d'un collecteur annulaire (10) fixe, placé le long du pourtour (6d) de l'organe rotatif (6) sans contact avec lui, ce collecteur comportant une ouverture périphérique située dans le plan du bord externe de l'organe rotatif et destinée à permettre la sortie d'une partie du liquide pulvérisé par ledit organe rotatif, l'installation comportant en outre des moyens pour récupérer la fraction du liquide pulvérisé qui n'a pas traversé ladite ouverture mais a été interceptée par le collecteur, et ramener cette fraction dans le circuit,

caractérisé en ce que

- le bord externe (6d) de l'organe rotatif tourne dans un plan (P) qui est vertical ou incliné sur l'horizontale, et

- l'ouverture périphérique du collecteur (10) est unique et la bissectrice de l'angle au centre θ du secteur correspondant à ladite ouverture θ est inclinée vers le bas.

2. Installation selon la revendication 1, caractérisée en ce que le collecteur (10) a la forme d'une gouttière sensiblement torique, à section transversale presque fermée à l'exception d'une fente annulaire étroite (10a) disposée pour recevoir des gouttelettes projetées par l'organe rotatif (6) sensiblement dans le plan (P), et que la partie la plus basse dudit collecteur en forme de gouttière est reliée à un réceptacle (12) de récupération du liquide.

3. Installation selon l'une quelconque des revendications 1 et 2, caractérisée en ce que le collecteure (10) comporte au moins un élément (10A) d'interception du liquide qui est déplaçable autour de l'axe géométrique de rotation de l'organe rotatif (6).

4. Installation selon la revendication 3, caractérisée en ce que le collecteur (10) comporte un second élément d'interception (10B), qui est fixe ou déplaçable autour de l'axe géométrique de rotation de l'organe rotatif (6), de façon à permettre d'ajuster sec eur d'anneau formé par les deux éléments d'interception (10A, 10B) du collecteur, entre une valeur minimale et une valeur maximale et de régler ainsi la largeur de l'ouverure périphérique dudit coffecteur (10).

5. Installation selon l'une des revendications 1 à 4, caractérisée en ce que l'ajutage (8) débouche en regard de la partie centrale (6c) de la face de l'organe rotatif (6) qui est opposée à un moteur (1) d'entraînement dudit organe rotatif, pour projeter le liquide à pulvériser sur ladite partie centrale.

6. Installation mobile de pulvérisation selon l'une quelconque des revendications 1 à 5, comportant une pluralité d'organes rotatifs (6A...6X), alimentés par au moins une pompe péristaltique (17A...17X), et permettant l'épandage d'un volume constant de liquide par unité de surface malgré les variations de sa vitesse d'avancement, caractérisée en ce que la pluralité d'organes rotatifs (6A...6X) est alimentée par une même pluralité de pompes péristaltiques, dont les rotors (24A...24X) sont calés sur un arbre commun (25), qui est lui-même accouplé de façon connue en soi au moyeu d'une roulette d'entraînement (32), par exemple une roulette à bandage pneumatique (33) peu gonflé, appliquée sur la périphérie d'une roue de l'installation mobile ou de son véhicule porteur et/ou tracteur.

7. Installation mobile selon la revendication 6, caractérisée en ce que l'élément de tube déformable (34A...34X) de chaque pompe péristaltique (17A...17X) est placé dans une cassette amovible (35A...35X), dont ledit élement de tube (34A...34X) est de préférence solidaire, par exemple par une extrémité, et qui présente une ouverture pour le passage des parties (24A1, 24A2...24X1, 24X2..) du rotor (24A...24X) destinées à l'écrasement local de l'élement de tube (34A...34X).

8. Installation selon l'une quelconque des revendications 6 et 7, caractérisée en ce qu'une roue libre (29) est interposée entre l'arbre commun (25) des pompes péristaltiques (17A...17X) et le moyeu (31) de la roulette (32).

9. Installation selon l'une quelconque des revendications 6 à 8, caractérisée en ce que des régulateurs de débit, formés par des manchettes dilatables (21A...21X), sont interposés entre les sorties des pompes péristaltiques (17A...17X) et les organes rotatifs (6A...6X) correspondants.

10. Installation selon l'une des revendications 6 à 9, caractérisée en ce qu'il est prévu, pour les pulvérisateurs, une pompe autonome pour ramener la fraction de liquide qui n'a pas traversé l'ouverture du collecteur vers un réservoir qui fait partie du circuit d'alimentation de l'ajutage.

**Patentansprüche**

1. Bewegliche Anlage zur Zerstäubung und Verteilung einer Flüssigkeit zur Behandlung von Kulturen und Ackerböden bei geringem Durchsatz, mit mindestens einem Zerstäuber, der versehen ist mit einem Drehkörper (6) in Form einer Scheibe oder einer Wanne, einer Düse (8) zum Fördern der zu zerstäubenden Flüssigkeit in Richtung des zentralen Abschnitts dieses Drehkörpers, einem Kreis zur Beaufschlagung der Düse mit einem Flüssigkeitsreservoir (18), und einem Auffangorgan, das von einem ortsfesten ringförmigen Sammler (10) gebildet wird, welcher entlang des Umfangs (6d) des Drehkörpers (6) ohne Berührung mit ihm angeordnet ist, wobei dieser Sammler eine Umfangsöffnung aufweist, die in der Ebene des Außenrandes des Drehkörpers liegt und dazu dient, den Austritt eines Teils der zerstäubten Flüssigkeit durch den Drehkörper zu ermöglichen, wobei die Anlage ferner Mittel aufweist, die dazu dienen, den Bruchteil der zerstäubten Flüssigkeit, der nicht durch die Öffnung hindurchgetreten ist, jedoch von dem Sammler aufgefangen wurde, wiederzugewinnen und diesen Bruchteil in den Kreis zurückzuführen, dadurch gekennzeichnet, daß:

-der Außenrand (6d) des Drehkörpers in einer Ebene (P) umläuft, die vertikal oder zur Horizontalen geneigt verläuft und

-die Umfangsöffnung des Sammlers (10) einteilig ist und die Winkelhalbierende des Winkels θ des dieser Öffnung entsprechenden Winkelsektors nach unten geneigt ist.

2. Anlage nach Anspruch 1, dadurch gekennzeichnet, daß der Sammler (10) die Form einer im wesentlichen torusförmigen Rinne hat, dessen Querschnitt nahezu geschlossen ist, mit Ausnahme eines geradlinigen ringförmigen Schlitzes (10a), der so angeordnet ist, daß er von dem Drehkörper (6) im wesentlichen in der Ebene (P) weggeschleuderte Tropfen auffängt, und daß der unterste Abschnitt des rinnenförmigen Sammlers mit einem Behältnis (12) zur Wiedergewinnung der Flüssigkeit verbunden ist.

3. Anlage nach einem der Ansprüche 1 und 2, dadurch gekennzeichnet, daß der Sammler (10) mindestens ein zum Auffangen der Flüssigkeit dienendes Element (10A) aufweist, das um die geometrische Rotationsachse des Drehkörpers (6) verschiebbar ist.

4. Anlage nach Anspruch 3, dadurch gekennzeichnet, daß der Sammler (10) ein zweites Auffangelement (10B) aufweist, das ortsfest oder um die geometrische Rotationsachse des Drehkörpers (6) verschiebbar ist, derart, daß der Winkel des von den beiden Auffangelementen (10A, 10B) des Sammlers gebildeten Ringsektors zwischen einem minimalen Wert und einem maximalen Wert herstellbar und somit die Breite der Umfangsöffnung des Sammlers (10) regelbar ist.

5. Anlage nach einem der Ansprüche 1 bis 4, dadurch gekennzeichnet, daß die Düse (8) gegenüber dem zentralen Abschnitt (6c) der Stirnseite des Drehkörpers (6) mündet, welche einem Motor (1) für den Antrieb des Drehkörpers gegenüberliegt, um die zu zerstäubende Flüssigkeit gegen diesen zentralen Abschnitt zu schleudern.

6. Bewegliche Zerstäubungsanlage nach einem der Ansprüche 1 bis 5, welche mehrere von mindestens einer peristaltischen Pumpe (17A...17X) gespeiste Drehkörper (6A...6X) aufweist und die Verteilung eines konstanten Flüssigkeitsvolumens pro Flächeneinheit trotz der Änderungen ihrer Vortriebsgeschwindigkeit erlaubt, dadurch gekennzeichnet, daß die Anzahl der Drehkörper (6A...6X) von der gleichen Anzahl peristaltischer Pumpen gespeist wird, deren Rotoren (24A...24X) auf einer gemeinsamen Welle (25) sitzen, die in an sich bekannter Weise mit der habe eines Antriebsrades (32), beispielsweise eines gering aufgeblasenen Luftreifen-Rades (33) gekuppelt ist, welches am Umfang eines Rades der beweglichen Anlage oder ihres Träger- und/oder Zugfahrzeuges angebracht ist.

7. Bewegliche Anlage nach Anspruch 6, dadurch gekennzeichnet, daß das verformbare Schlauchelement (34A...34X) jeder peristaltischen Pumpe (17A...17X) in einem entfernbaren Kasten (35A...35X) angeordnet ist, mit dem das Schlauchelement (34A...34X) vorzugsweise fest, beispielsweise an einem Ende, verbunden ist und der eine Öffnung für den Durchtritt von Abschnitten (24A1, 24A2...24X1, 24X2...) des Rotors (24A...24X) aufweist, die zum örtlichen Zusammendrücken des Schlauchelementes (34A...34X) dienen.

8. Anlage nach einem der Ansprüche 6 und 7, dadurch gekennzeichnet, daß eine freilaufende Rolle (29) zwischen die gemeinsame Welle (25) der peristaltischen Pumpen (17A...17X) und die Nabe (31) des Rades (32) eingesetzt ist.

9. Anlage nach einem der Ansprüche 6 bis 8, dadurch gekennzeichnet, daß die Durchsatzregler, die von wärmedehnbaren Balgen (21A...21X) gebildet werden, zwischen den Auslässen der peristaltischen Pumpen (17A...17X) und den entsprechenden Drehkörpern (6A...6X) angeordnet sind.

10. Anlage nach einem der Ansprüche 6 bis 9, dadurch gekennzeichnet, daß für die Zerstäuber eine autonome Pumpe vorgesehen ist, die den durch die Öffnung des Sammlers nicht hindurchgelangten Bruchteil der Flüssigkeit zu einem Reservoir zurückführt, welches einen Teil des Kreises zur Beaufschlagung der Düse bildet.

## Claims

1. A mobile machine for spraying and scattering with a small rate a treatment liquid for plants or soils comprising at least one sprayer having a rotary member (6) in the form of a disc or a cup, a nozzle (8) for projecting towards the central portion of the said rotary member, a feeding circuit for the nozzle comprising a tank (18) of liquid and an interception member consisting of a fixed annular collector (10) placed along the periphery (6d) of the rotary member (6) without contact with it, this collector having a peripheral opening in the plane of the eternal edge of the rotary member and intended to allow the outlet of a portion of the liquid sprayed by said rotary member, the machine further comprising means for recovering the portion of the sprayed liquid which has not passed through the said opening but has been intercepted by the collector, and for returning this portion into the circuit,

characterized in that :

- the external edge (6d) of the rotary member rotates in a plan (P) which is vertical or inclined relative to an horizontal plane, and

- the peripheral opening of the collector (10) is unique and the bissectrix of the central angle (θ) of the corresponding sector is inclined downwards.

2. A machine as in Claim 1, wherein the collector (10) has the shape of a substantially toroidal gutter of cross-section nearly closed except for a narrow annular slit (10a) placed for receiving droplets projected by the rotary member (6) substantially in the plane (P) and in that the lowest portion of the said gutter-shaped collector is connected to a receiver for recovery of the liquid.

3. A machine as in Claim 1, wherein the collector (10) comprises at least one component (10A) for intercepting the liquid which can be displaced about the geometrical axis of rotation of the rotary member (6).

4. A machine as in Claim 3, wherein the collector (10) includes a second interception component (10B) which is fixed or displaceable about the geometrical axis of rotation of the rotary member (6), so as to permit to adjust the angle of the sector of a ring formed by the two interception components (10A, 10B) of the collector between a minimum value and a maximum value and thereby to adjust the width of the peripheral opening of the said collector (10).

5. Machine according to anyone of the claims 1 to 4, characterized in that the nozzle (8) opens in front of the central portion (6c) of the face of the rotary member which is opposite a motor (1) for driving the said rotary member, for projecting onto the said central portion the liquid to be sprayed.

6. A mobile spraying machine as anyone of the claims 1 to 5, comprising a number of rotary members (6A...6X), fed at least one by peristaltic pumps (17A...17X) and adapted for scattering a constant volume of liquid per unit area in spite of variations in its speed of travel, characterized in that the number of the rotary members (6A...6X) are fed by the same member of peristaltic pumps, the rotors (24A...24X) of which are keyed onto a common shaft (25) coupled in a manner which is known by itself to the hub of a driving roller (32), for example, a roller having a pneumatic tyre (33) which is inflated only a little, said roller being applied against the periphery of one wheel of the mobile machine or of the vehicle carrying and/or pulling it.

7. A mobile machine as in Claim 6, wherein the deformable tube member (34A...34X) of each peristaltic pump (17A...17X) is placed in a removable case (35A...35X) to which the said tube member (34A...34X) is preferably fixed, for example, by one end, said removable case having an opening for passing through the portions (24A1, 24A2...24X1, 24X2) of the pump rotor (24A...24X) adapted for local squeezing of the tube member (34A...34X).

8. A machine as in Claim 7, wherein a freewheel (29) is interposed between the common shaft (25) of the peristaltic pumps (17A...17X) and the hub (31) of the roller (32).

9. A machine as in Claim 7, characterized in that flow-regulators consisting of expansible sleeves (21A...21X) are interposed between the outlets of the peristaltic pumps (17A...17E) and the respective rotary members (6A...6X).

10. A machine as in Claims 6 to 9, characterized in that it is provided for the sprayers an independent pump for the return of the portion of liquid which has not passed through the opening of the collector into a tank which is part of the feeding circuit of the nozzle.

FIG.:2

FIG.:1

FIG.:3

FIG.:4

0 055 948

FIG.:5

0 055 948

FIG.:6

FIG.:7